Europäisches Patentamt

European Patent Office

Office européen des brevets

(11) Veröffentlichungsnummer: **0 295 377**

**A2**

## (12) EUROPÄISCHE PATENTANMELDUNG

(21) Anmeldenummer: **88105774.9**

(22) Anmeldetag: **12.04.88**

(51) Int. Cl.⁴: **G05D 23/19 , F25B 49/00**

(30) Priorität: **16.06.87 DE 3720085**

(43) Veröffentlichungstag der Anmeldung:
**21.12.88 Patentblatt 88/51**

(84) Benannte Vertragsstaaten:
**CH DE FR GB IT LI**

(71) Anmelder: **MASCHINENFABRIK BERTHOLD HERMLE GMBH & CO.**
**Industriestrasse 8-12**
**D-7209 Gosheim(DE)**

(72) Erfinder: **Ulber, Hans-Christoph**

**D-7209 Wehingen(DE)**
Erfinder: **Frassmann, Joachim**

**D-7461 Obernheim(DE)**

(74) Vertreter: **Patentanwälte Dipl.-Ing. Klaus Westphal Dr. rer. nat. Bernd Mussgnug Dr. rer.nat. Otto Buchner**
**Waldstrasse 33**
**D-7730 VS-Villingen(DE)**

(54) **Verfahren und Anordnung zur Temperaturregelung insbesondere bei Kühlzentrifugen.**

(57) Die Anordnung zur Temperaturregelung in einer Kammer (10) besteht aus einem Kühlaggregat mit Kompressor (14) und Kondensator (15). Das Kühlmittel wird über ein steuerbares Ventil (13) in die Kühlschlangen (11) impulsartig injiziert. Während der Impulspausen wird vom Kompressor (14) geliefertes Heißgas über die Leitung (16) und das steuerbare Ventil (17) in die Kammern (11) injiziert. Durch das abwechselnde Injizieren von Kühlmittel und Heißgas wird ein besseres Regelverhalten der Temperaturregelung erreicht.

FIG.1

EP 0 295 377 A2

## Verfahren und Anordnung zur Temperaturregelung insbesondere bei Kühlzentrifugen

Die Erfindung betrifft ein Verfahren zur Temperaturregelung insbesondere bei Kühlzentrifugen, wie dieses mit dem Oberbegriff des Hauptanspruchs angegeben ist.

Ein solches Verfahren geht aus der DE-PS 33 43 516 derselben Anmelderin hervor.

Ferner betrifft die Erfindung eine spezielle Anordnung zur Durchführung des Verfahrens, die mit dem Oberbegriff des Anspruchs 2 angegeben ist und gleichfalls aus der oben genannten Patentschrift grundsätzlich bekannt ist.

Nach diesem bekannten Kühlverfahren wird zum Zwecke der besseren Regelung der Kammertemperatur das Kühlmittel impulsartig injiziert, wobei die Impulsbreite der Injektion in Abhängigkeit von der festgestellten Temperaturdifferenz eingestellt wird.

Mit diesem Verfahren läßt sich die Temperatur in einem sehr weiten Regelbereich nahezu beliebig lang weitgehend konstant halten.

Bei vergleichsweise großen Massen der Kammer und insbesondere des zu kühlenden Objektes, z.B. eines großvolumigen Rotors, folgt in einzelnen Fällen die Kammertemperatur der Regelung nicht - schnell genug, wenn eine Temperaturerhöhung zur Einhaltung oder zum Erreichen der vorgegebenen Kammertemperatur erforderlich ist.

Der vorliegenden Erfindung liegt darum die Aufgabe zugrunde, das Verfahren so zu verbessern, daß der Regelvorgang rascher erfolgt und ausserdem ein stabileres Temperaturverhalten erreicht wird.

Nach der mit Anspruch 1 vorgeschlagenen Erfindung wird dies dadurch erreicht, daß nicht nur Kühlmittel sondern Heißgas, und zwar in den Impulspausen injiziert wird. Durch Injizieren von Heißgas wird die Erwärmung des Kühlsystems von der festgestellten niedrigen Temperatur auf die vorgegebene höhere Temperatur beschleunigt. Durch das abwechselnde Injizieren von Kühlmittel und Heißgas wird erreicht, daß sich die Temperatur des Systems schon nach sehr kurzer Taktzeit auf den arithmetischen Mittelwert des impulsbreitenmodulierten Signales einpendelt. Das führt einerseits zu raschen Umschaltzeiten und andererseits zu einem sehr stabilen Temperaturverhalten unter allen Betriebsbedingungen. Bei Injizierung von Heißgas ist es anders als bei dem bekannten System sogar möglich, die Kammertemperatur auf einer oberhalb der Raumtemperatur liegenden Temperatur sowohl bei Rotorumlauf als auch bei Rotorstillstand zu stabilisieren.

In den Ansprüchen 2 und 3 sind zweckmäßige Anordnungen zur Durchführung des erfindungsgemäßen Verfahrens gekennzeichnet.

Mit Anspruch 4 wird schließlich eine Schaltung zur Erzeugung der impulsbreitenmodulierten Rechteckspannung, mit welcher die Magnetventile steuerbar sind, vorgeschlagen.

Der Gegenstand der Erfindung ist nachstehend anhand von Zeichnungen im einzelnen erläutert. In diesen zeigen

Figur 1 - Anordnung zum Kühlen einer Kühlkammer in schematischer Darstellung,

Figur 2 - Blockschaltbild der Schaltungsanordnung zur Impulsbreiten-Modulation und

Figur 3 - Impulsfolge zur Steuerung der Ventile 13 und 17 in Figur 1.

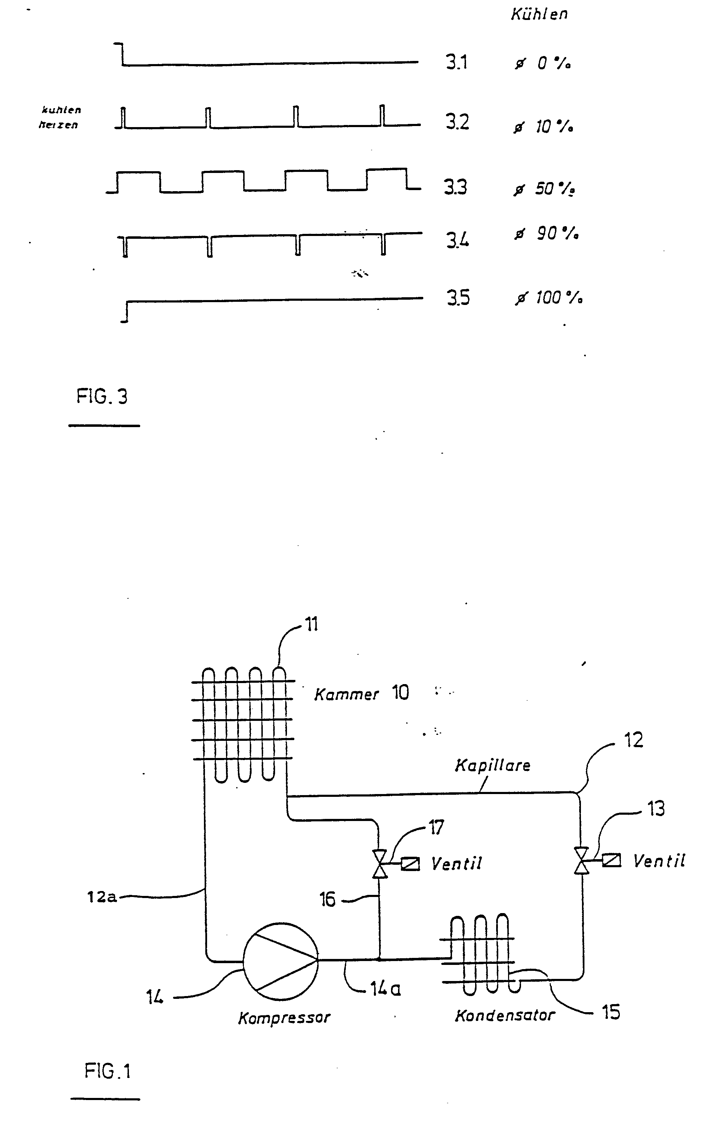

In Figur 1 ist die Anordnung zur Kühlung einer Kammer 10, beispielsweise der Kühlkammer einer im einzelnen in der deutschen Patentschrift 33 43 516 dargestellten Kühlzentrifuge, schematisch dargestellt. Der Kühlung dienen in der Kammer befindliche Kühlschlangen 11, welche über die Leitungen 12 bzw. 12a mit dem Kühlaggregat verbunden sind, das in bekannter Weise aus Kompressor 14 und Kondensator 15 besteht. Das Kühlmittel wird pulsartig in die Kühlschlangen 11 injiziert. Zu diesem Zweck ist in der Leitung 12 ein steuerbares Magnetventil 13 angeordnet, das nach einem vorbestimmten Takt impulsartig geöffnet und geschlossen wird. Hierbei ist die Impulsbreite in Abhängigkeit von der festgestellten Isttemperatur veränderbar, was nachstehend noch erläutert ist.

Nach dem Vorschlag gemäß vorliegender Erfindung wird in den Impulspausen, also bei gesperrtem Ventil 13, in die Kühlschlangen 11 Heißgas injiziert. Zu diesem Zweck ist der Druckgasausgang 14a des Kompressors über die Leitung 16 mit den Kühlschlangen 11 verbunden. In der Leitung 16 befindet sich ein weiteres steuerbares Magnetventil 17, das im Gegentakt mit dem Ventil 13 angesteuert wird.

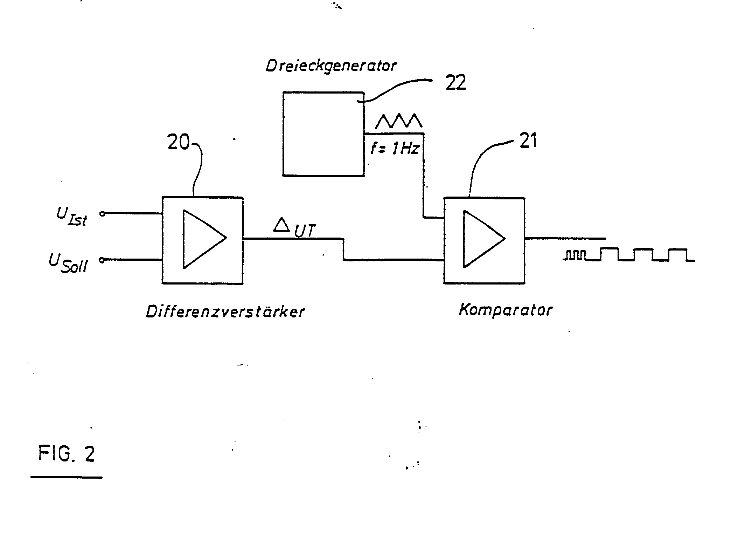

Der Erzeugung der impulsbreitenmodulierten Steuersignale dient die schematisch in Figur 2 dargestellte Modulationsschaltung.

Den beiden Eingängen des Differenzverstärkers 20 wird einerseits eine Spannung $U_{Ist}$, welche der in der Kühlkammer 10 gemessenen Isttemperatur entpricht, und einer Spannung $U_{Soll}$, nämlich einer Spannung, die der gewünschten Solltemperatur entspricht, zugeführt. Am Ausgang des Differenzverstärkers 20 erscheint eine Spannungsdifferenz $\Delta U_T$, welche der Abweichung der Isttemperatur von der Solltemperatur entspricht. Um aus dieser Temperaturdifferenz eine für die Ansteuerung der Ventile 13 und 17 geeignete Impulsfolge zu erzeugen, wird die Spannung $\Delta U_T$ in einem Komparator 21 mit der Dreiecksspannung überlagert, die von einem Dreieckgenerator 22 erzeugt wird.

Zu diesem Zweck sind die Ausgänge des Differenzverstärkers 20 und des Dreieckgenerators 22 jeweils mit einem Eingang des Komparators 21 verbunden. Die Frequenz der Dreiecksspannung beträgt vorzugsweise 1 Hz.

Am Ausgang des Komparators erscheint eine Impulsfolge, bei welcher die Impulsbreite von der festgestellten Temperaturdifferenz abhängt.

In Figur 3 sind verschiedene Impulsfolgen dargestellt, wobei die positiven Impulse das Ventil 13 aufsteuern, also während der Impulsdauer den Eintritt von Kühlmittel in die Kühlschlangen 11 ermöglichen. Während dieser Zeitdauer ist das Ventil 17 geschlossen, so daß das vom Kompressor erzeugte Heißgas nicht in die Kühlschlangen 11 gelangen kann. Während der Pausen, also bei geschlossenem Ventil 13, ist dagegen das Ventil 17 geöffnet, so daß Heißgas in die Schlangen 11 eintritt.

Mit der Impulsfolge 3.1 ist ein reiner Heizbetrieb veranschaulicht. Das Ventil 13 ist permanent geschlossen und das Ventil 17 permanent geöffnet.

Mit der Impulsfolge 3.2 ist ein Betrieb veranschaulicht, bei welchem während 10 % der Impulsperiode gekühlt, während der übrigen Zeit dagegen erwärmt wird.

Die Impulsfolge 3.3 veranschaulicht einen Betrieb, bei welchem während gleicher Intervalle gekühlt und geheizt wird. Dieser Betrieb entspricht dem Zustand, in welchem Isttemperaturen und Solltemperatur übereinstimmen.

Die Impulsfolge 3.4 schließlich veranschaulicht den Betrieb, bei welchem während 90 % der Impulsdauer gekühlt und nur während 10 % der Impulsdauer geheizt wird.

Im Betrieb gemäß der Impulsfolge 3.5 dagegen wird permanent gekühlt, das Ventil 13 ist dauernd geöffnet und das Ventil 17 dauernd geschlossen.

Mittels einer derartigen Regelung ist es möglich, schon nach sehr kurzer Taktzeit die vorgegebene Kühlkammertemperatur zu erreichen, wobei das System ein ausserordentlich stabiles Temperaturverhalten unter allen Betriebsbedinungen besitzt. Da nicht nur gekühlt sondern auch erwärmt wird, kann die Kammer sogar auf über Raumtemperatur liegende Temperaturen stabilisiert werden.

## Ansprüche

1. Verfahren zur Temperaturregelung insbesondere bei Kühlzentrifugen, bei welchem impulsartig Kühlmittel injiziert und die Impulsbreite der Injektion in Abhängigkeit von der Differenz zwischen vorgebener Solltemperatur und gemessener Isttemperatur eingestellt wird, dadurch gekennzeichnet, daß in den Impulspausen Heißgas injiziert wird.

2. Anordnung zur Durchführung des Verfahrens nach Anspruch 1 mit einem Kühlaggregat, bestehend aus Kompressor und Kondensator, und in der Kühlkammer angeordnete Kühlschlangen, welche mit dem Kühlaggregat über ein steuerbares Ventil, vorzugsweise ein Magnetventil, verbunden sind, wobei in der Kühlkammer ein Temperaturfühler zur Messung der Isttemperatur vorgesehen ist, aus dessen Meßwert eine das Ventil während der Dauer eines Impulses öffnende Regelgröße abgeleitet wird, dadurch gekennzeichnet, daß die Kühlschlangen (11) über ein weiteres steuerbares Ventil (17), vorzugsweise ein Magnetventil, mit einer Heißgasquelle (14) verbunden sind, wobei das weitere Ventil (17) während der Impulspausen geöffnet wird.

3. Anordnung nach Anspruch 2, dadurch gekennzeichnet, daß der Kompressor (14) des Kühlaggregates als Heißgasquelle dient, wobei seine Druckgasleitung (14a) über das weitere steuerbare Ventil (17) mit den Kühlschlangen (11) der Kammer (10) verbunden ist.

4. Anordnung nach Anspruch 2 oder 3 mit einem Impulsbreiten modulator zur Steuerung der Ventile, dadurch gekennzeichnet, daß der Impulsbreiten-Modulator aus einem Komparator (21) besteht, dessen erster Eingang mit dem eine Dreieckspannung konstanter Frequenz und Amplitude liefernden Ausgang eines Dreieckgenerators (22) und dessen zweiter Eingang mit dem Ausgang eines Differenzverstärkers (20), der eine der Differenz zwischen Ist- und Solltemperatur entsprechende Spannung liefert, verbunden ist und dessen Ausgang eine impulsbreitenmodulierte Rechteckspannung liefert.

EP 0 295 377 A2

Kühlen

3.1 ⌀ 0 %

kühlen
heizen

3.2 ⌀ 10 %

3.3 ⌀ 50 %

3.4 ⌀ 90 %

3.5 ⌀ 100 %

FIG. 3

11

Kammer 10

Kapillare 12

13

17 Ventil

Ventil

12a

16

14 14a 15

Kompressor Kondensator

FIG.1

FIG. 2